# EUROPÄISCHE PATENTSCHRIFT

(11) **EP 3 197 654 B1**
(45) Veröffentlichungstag und Bekanntmachung des Hinweises auf die Patenterteilung: **16.12.2020**
(21) Anmeldenummer: 15767538.0
(22) Anmeldetag: 25.09.2015
(51) Int. Cl.: B29B 11/08, B29B 11/14, B29C 49/06, B29C 49/12, B29C 45/56

(54) **PREFORMS UND VERFAHREN ZUR HERSTELLUNG VON PREFORMS**
PREFORMS AND METHOD FOR PRODUCING PREFORMS
PRÉFORMES ET PROCÉDÉ DE FABRICATION DE PRÉFORMES

(30) Priorität: 25.09.2014 CH 14532014
(43) Veröffentlichungstag der Anmeldung: 02.08.2017
(73) Patentinhaber: Alpla-Werke Alwin Lehner GmbH und Co.KG, 6971 Hard (AT)
(72) Erfinder: SIEGL, Robert, A-6850 Dornbirn (AT)
(74) Vertreter: Riederer Hasler & Partner Patentanwälte AG
(86) Internationale Anmeldenummer: PCT/EP2015/072118
(87) Internationale Veröffentlichungsnummer: WO 2016/046370

(56) Entgegenhaltungen:
- EP-A1- 1 403 028
- EP-A1- 2 623 292
- WO-A1-2008/031447
- WO-A1-2013/051601
- DE-A1- 2 503 911
- GB-A- 2 445 547
- US-A- 6 017 698
- DATABASE WPI Week 199208 Thomson Scientific, London, GB; AN 1992-059260 XP002736213, -& JP H03 295615 A (TOYO SEIKAN KAISHA LTD) 26. Dezember 1991 (1991-12-26)
- N/a: "A Guide to Polyolefin Blow Molding", Lyondell Chemical Company, 1 March 2004 (2004-03-01), pages 1-55, XP055363502, Retrieved from the Internet: URL:https://www.lyondellbasell.com/globala ssets/documents/polymers-technical-literat ure/a-guide-to-polyolefin-blow-molding.pdf ?id=13941 [retrieved on 2017-04-10]
- Anonymous: "BASF Novolen 1100 N Polypropylene, Injection Molding Grade", , 18 June 2020 (2020-06-18), XP055706307, Retrieved from the Internet: URL:http://www.matweb.com/search/datasheet .aspx?matguid=d1c4a1f9c50940e5a05c53050699 01da&ckck=1 [retrieved on 2020-06-18]

## Beschreibung

### Technisches Gebiet

Die Erfindung betrifft einen Preform mit geringem Innendurchmesser sowie ein Verfahren zur Herstellung eines solchen Preforms.

### Stand der Technik

Für die Verpackung von flüssigen Lebensmitteln und anderen schüttfähigen Stoffen, beispielsweise von Reinigungsmitteln, Körperpflegemitteln, Kosmetika, Kfz-Medien etc., kommen heutzutage hauptsächlich Kunststoffbehälter zum Einsatz. Viele Werkstoffe erlangen aber erst durch eine Verstreckung ihre besonderen Eigenschaften. Das weit verbreitete Polyethylenterephthalat (PET) beispielsweise erreicht durch das Verstrecken eine teilweise über zehnfach erhöhte Festigkeit gegenüber unverstrecktem PET. Insbesondere flaschenförmige Kunststoffbehälter werden deshalb oft in einem sogenannten Spritzstreckblasverfahren hergestellt.

Dabei wird zunächst in einem Spritzgiessprozess in einer Spritzform ein Preform hergestellt. Der Preform weist normalerweise einen im Wesentlichen länglichen, zylindrischen Körper auf und ist an einem Längsende geschlossen ausgebildet. Zweckmässigerweise trennt ein Supportring den Körper von einem Halsteil mit einer Ausgiessöffnung. Dabei kann das Halsteil bereits die spätere Form des Flaschenhalses aufweisen. An der Aussenseite oder der Innenseite des Halsteils kann ein Gewinde oder ein anderes Mittel für die Festlegung eines Behälterverschlusses ausgebildet sein. Derartige Preforms sind auch für die vorliegende Erfindung von Bedeutung.

Der Preform wird nach seiner Herstellung entformt und gleich weiterverarbeitet oder für eine spätere Verarbeitung durch eine Blasmaschine zwischengelagert. Vor der Weiterverarbeitung in einer Blasmaschine wird der Preform bei Bedarf konditioniert. Danach wird er in eine Blasform der Blasmaschine eingebracht und dort mit einem Reckdorn (dieser wird auch als "Reckstange", "Streckdorn", "Streckstempel" oder "core rod" bezeichnet) verstreckt und durch ein in den Preform eingeblasenes Gas gemäss der Formkavität der Blasform aufgeblasen. Nach Abschluss des Blasprozesses wird die fertige Kunststoffflasche entformt. Dieser zweite Teil des Spritzstreckblasverfahrens ist ein Streckblasverfahren.

Für die vorliegende Anmeldung sind insbesondere sogenannte zweistufige Spritzstreckblasverfahren (oder synonym: "2-Stufen-Spritzstreckblasverfahren") von Bedeutung. Im zweistufigen Spritzstreckblasverfahren wird im ersten Schritt (Stufe) ein Preform gefertigt, und im zweiten Schritt (Stufe) der Preform zur Flasche streckgeblasen (Streckblasverfahren), wobei im zweistufigen Spritzstreckblasverfahren beide Schritte (Stufen) voneinander örtlich und zeitlich getrennt sind (Durchführung mittels getrennter Maschinen). Es sind aber auch Blasverfahren bekannt, bei denen der Strecken und Blasen direkt anschliessend an das Spritzen des Preforms und auf derselben Maschine erfolgt (z.B: Einstufiges Spritzstreckblasen). Oder der Preform verbleibt teilweise bei solchen Prozessen auf dem Spritzkern, der zugleich eine Art Reckdorn bildet (Spritzblasen). Jedoch wird der Großteil der Flaschen im zweistufigen Spritzstreckblasverfahren hergestellt.

PET-Preforms werden beim 2-stufigen Spritzstreckblasen üblicherweise auf das Zwei- bis Fünffache verstreckt. Für Flaschen mit einem Fassungsvermögen von einem halben Liter, welche einen Durchmesser von etwa 6 Zentimetern aufweisen können, ist dies mit einem Preform eines Durchmessers von etwa 2 Zentimetern einfach realisierbar. Dies deshalb, weil der Spritzkern bei einem solchen Durchmesser des Preforms selbst bei einer Wandstärke desselben von 4 Millimetern immer noch einen Durchmesser von über einem Zentimeter aufweisen kann, was eine ausreichende Stabilität des Spritzkerns und die Integration einer Kühlung in den Spritzkern erlaubt. Bei kleineren Flaschen von z.B. 100 oder 200 Millilitern ist der Durchmesser der Flaschen und damit auch der Durchmesser der Preforms, aus denen diese hergestellt werden, hingegen wesentlich kleiner. Entsprechend werden für die Herstellung solcher Preforms auch dünnere Spritzkerne benötigt. Spritzkerne mit einem Durchmesser von weniger als einem Zentimeter sind jedoch problematisch. Werden sie aus gehärtetem Stahl hergestellt, so brechen sie leicht, wenn bei einer Fehlfunktion des Werkzeugs Material in die Spritzkavität geflossen ist. Oder sie werden bleibend deformiert, was bewirkt, dass im Prozess beim Preform keine gleichmässige Wandstärke mehr erzeugt werden kann. Spritzkerne, die aus einem flexibleren Material als gehärtetem Stahl hergestellt sind, haben den Nachteil, dass sie während des Spritzgiessens durch den Druck des eingespritzten Polymers reversibel in eine Richtung gebogen werden können, was wiederum zu einer ungleichmässigen Wandstärke beim Preform führt. Eine ungleichmässige Wandstärke beim Preform hat jedoch eine ungleichmässige Wandstärke beim daraus herzustellenden Behälter zur Folge, was unerwünscht ist. Ein weiteres Problem dünner Spritzkerne besteht - je nach Dimensionierung - in der eingeschränkten oder nicht vorhandenen Möglichkeit, diese intern ausreichend durch Kühlwasser zu kühlen, weil der Platz für Kühlgänge beschränkt ist.

Zusätzlich besteht bei der Verwendung von kleinen Spritzkernen das Problem, dass die sich durch die Kühlung zusammenziehende Polymerschmelze sich von der viel größeren Aussenkontur der Kavität löst und eine weitere Kühlung der Polymerschmelze sodann nur durch die viel kleinere Fläche des Spritzkernes erfolgen kann. Bei bekannten Spritzguss-Verfahren wird deshalb versucht, in einer sogenannten Nachdruck-Phase möglichst viel Polymerschmelze in die Kavität nachzuspritzen, um den Volumenschwund der erkaltenden Schmelze auszugleichen. Jedoch gelingt dies nur mangelhaft und ist spätestens beim Abfrieren des Angusses technisch nicht mehr möglich.

Neben dem Stand der Technik im Spritzgussverfahren sind zahlreiche Verfahren des Preform-Fliesspressens bekannt, bei denen im wesentlichen die Kavität nur zum Teil aufgefüllt wird und durch das Eindringen des Spritzkerns das Material so verdrängt wird (fließt), dass die gesamte Preform-Kavität ausgefüllt wird.

Jedoch sind die Kräfte im Fließpressverfahren noch viel höher, so dass kleine Preforms mit dünnwandigen Kernen auch mit solchen Verfahren nicht hergestellt werden können. Es gibt hier ähnliche Probleme wie beim Spritzguss bezüglich der Kernstabilität (zu fragil und brüchig oder viel zu biegsam).

Zusätzlich existieren noch eine Reihe ganz alltäglicher Probleme bei Spritzguss-Verfahren zur Herstellung von Preforms. Beispielsweise wird ein Preform typischerweise so ausgelegt, dass die Polymermasse den ganzen Preform auffüllen kann. Bei Verwendung üblicher PET-Polymermassen mit einer Viskosität von 0,72 bzw. 0,88 dl/g (nach ASTM D4603) sollte ein Verhältnis von der durchschnittlichen Preform-Wandstärke zum Fliessweg (Anspritzpunkt bis zum Ende des Gewindes) von 1 zu 56 nicht überschritten werden, da es sonst schwierig wird, die gesamte Preform-Kavität zu füllen.

Zum Stand der Technik gehören unter anderem EP1403028A1, WO2008031447A1, WO2013051601A1, JP H03 295615 und DE2503911A1, welche Preforms mit zum Teil kleinem bzw. variierendem Durchmesser zeigen, sowie GB2445547A und EP2623292A1, die eine Blasform bzw. ein Sprizgussverfahren lehren. Die US 6,017,698 zeigt ein röhrenförmiges Gefäß, das als ein Spritzteil aus Novolen 1100 UCX, einem Polypropylen, zur Aufnahme von biologischem Material ausgebildet ist. Bei dem Gefäss handelt es sich jedoch um keinen Preform, welcher dazu vorgesehen ist in einem zweiten Prozessschritt zu einem Gefäss aufgeblasen zu werden.

### Aufgabe der Erfindung

Eine Aufgabe der vorliegenden Erfindung ist es, Preforms sowie ein Verfahren zur Herstellung von Preforms bereitzustellen. Die Preforms sollen geringe Volumina aufweisen, kostengünstig herstellbar sein und sich zur Herstellung kleiner Flaschen mit hohem Reckverhältnis zur Streckverfestigung der Behälterwandung eignen.

Weitere Vorteile und Ziele der vorliegenden Erfindung ergeben sich aus der nachfolgenden Beschreibung.

### Darstellung der Erfindung

Die oben genannte Aufgabe wird gelöst durch einen Preform nach Anspruch 1 , eine Vorrichtung nach Anspruch 15 und ein Verfahren zur Herstellung eines Preforms nach Anspruch 9.

Offenbart sei unter anderem ein Preform zur Herstellung eines Kunststoffbehälters in einem zweistufigen Spritzstreckblasverfahren aufweisend einen sich entlang einer Mittelachse des Preforms erstreckenden Preformkörper mit einem ersten Ende und einem dem ersten Ende gegenüberliegenden zweiten Ende, wobei das erste Ende verschlossen ist und sich an das zweite Ende ein Halsteil mit einer Ausgießöffnung anschließt, und mit einer einen Innenraum des Preforms begrenzenden Innenwandung, wobei im Innenraum auf einer Länge von mindestens 30 Millimetern jeder Punkt der Innenwandung von der Mittelachse weniger als 3,5 Millimeter beabstandet ist.

Offenbart sei darüber hinaus ein Verfahren zur Herstellung eines Preforms, wobei
- eine Kavität einer Form vollständig mit einer heissen fliessfähige Polymermasse gefüllt wird, wobei die Kavität durch eine Matrize und einen Kern gebildet ist, wobei die Matrize die Aussenform des Preforms definiert und wobei der Kern die Form des Innenraums des Preforms im Bereich des Halsteils definiert,
- die heisse Polymermasse durch Kontakt mit der Matrize und dem Kern gekühlt wird, wobei durch das Erkalten der Polymermasse bei der Polymermasse ein Volumenschwund bewirkt wird, und
- ein Stift entlang der Mittelachse des herzustellenden Preforms in die Polymermasse eingefahren wird, wobei durch das Einfahren des Stifts der Volumenschwund kompensiert wird, wobei der Stift zumindest einen Teilbereich der Form des Innenraums des Preforms im Bereich des Preformkörpers definiert,
- auf einer Länge von mindestens 30 Millimetern jeder Punkt der Innenwandung des herzustellenden Preforms (und/ oder jeder Punkt des Stifts) von der Mittelachse weniger als 3,5 Millimeter beabstandet ist, und
- der Preform aus der Kavität entfernt wird.

Nachfolgend werden Merkmale beschrieben, wobei diese (individuell) als bevorzugte Merkmale zu betrachten sind, auch wenn sie nicht explizit als solche bezeichnet werden. Die Merkmale seien separat (als Teil einer beliebigen Verfahrens oder eines beliebigen Preforms) und - soweit sie sich nicht ausschliessen - in beliebiger Kombination offenbart. Dies schliesst die Möglichkeit der gleichzeitigen Verwirklichung aller beschriebenen Merkmale ein.

Bevorzugt werden zur Verwendung in einem Streckblasverfahren und/oder zur Herstellung von Kunststoffbehältern, wie sie in der Anmeldung mit dem Titel "Kunststoffbehälter und Streckblasverfahren" mit demselben Anmeldetag wie die vorliegende Anmeldung offenbart sind, Preforms verwendet, wie sie in der vorliegenden Anmeldung beschrieben sind. Das in der vorliegenden Anmeldung offenbarte Verfahren zur Herstellung eines Preforms kann auch Teil eines 2-Stufen-Streckblasverfahrens zur Herstellung von Kunststoffbehältern gemäss der oben erwähnten Anmeldung mit dem Titel "Kunststoffbehälter und Streckblasverfahren" sein. Der Inhalt der besagten Anmeldung sei als Teil des Inhalts der vorliegenden Anmeldung anzusehen.

Der Preform ist zur Herstellung eines Kunststoffbehälters in einem 2-stufigen Spritzstreckblasverfahren vorgesehen. Bei einem zweistufigen Spritzstreckblasverfahren wird der Preform nach seiner Herstellung auf Raumtemperatur abgekühlt und optional zwischengelagert, bevor er durch Streckblasen zum Behälter weiterverarbeitet wird. Vor dem Streckblasen wird der Preform vorzugsweise in einem Ofen erhitzt, wobei der gesamte Preform oder zumindest der Preformkörper erhitzt wird und zwar bevorzugt auf eine Temperatur von mindestens 80 Grad Celsius.

Der Preformkörper erstreckt sich entlang der Mittelachse des Preforms und weist ein erstes Ende und ein dem ersten Ende im Wesentlichen gegenüberliegendes zweites Ende auf. Das erste Ende ist dabei durch einen Boden des Preforms verschlossen. An das zweite Ende des Preformkörpers schliesst sich ein Halsteil mit einer Ausgießöffnung an. Darüber hinaus weist der Preform eine den Innenraum des Preforms begrenzende Innenwandung auf. Die Mittelachse verläuft durch das erste Ende und vorzugsweise das zweite Ende des Preformkörpers. Es ist dabei bevorzugt, wenn die Mittelachse durch die Mitte des Innenraums und/oder den Mittelpunkt der Ausgiessöffnung verläuft.

Auf einer Länge des Preforms von mindestens: 30,40 oder 50 Millimetern ist jeder Punkt der Innenwandung weniger als: 3,5 oder 3 oder 2,5 Millimeter von der Mittelachse beabstandet, wobei die Länge des Preforms parallel zur Mittelachse gemessen wird. Vorzugsweise schliesst sich ein Bereich mit der beschriebenen Länge und dem beschriebenen Abstand der Innenwandung von der Mittelachse an den Boden des Preforms an und/oder der besagte Bereich ist im weiter unten beschriebenen, sich an den Boden des Preforms anschliessenden Abschnitt des Preformkörpers enthalten.

Ein vorteilhafter Preform weist ein Halsteil mit einer Öffnung und einen Preformkörper auf. Die Öffnung des Halsteils entspricht der Ausgiessöffnung des aus dem Preform herzustellenden Behälters oder eine genannte Ausgiessöffnung entsteht im Verfahren aus der genannten Öffnung. Deshalb wird in diesem Dokument die Öffnung des Halsteils bei der Beschreibung des Preforms ebenfalls als Ausgiessöffnung bezeichnet.

Am Halsteil kann ein Supportring angeordnet sein und zwar vorzugsweise am Übergangsbereich zwischen Halsteil und Preformkörper. Ein solcher Supportring erleichtert die Handhabung des Preforms bei zweistufigen Prozessen, bei denen diese nach der Herstellung zwischengelagert werden.

Der Preform kann gemäss einer Variante einen im Wesentlichen zylindrischen (insbesondere kreiszylindrischen) Preformkörper aufweisen. Das Halsteil kann ebenfalls eine solche Form besitzen.

Es kann jedoch auch vorgesehen sein, dass der Preformkörper im Wesentlichen rotationssymmetrisch ausgebildet ist oder im Schnitt rechtwinklig zur Mittelachse rund oder oval ist oder die Form eines regelmässigen Polygons aufweist.

Der Preformkörper kann länglich und/oder im Wesentlichen röhrenförmig ausgebildet sein.

Alternativ oder zusätzlich besteht die Möglichkeit, dass der Preformkörper sich vom Halsteil in Richtung des Bodens des Preforms verjüngt.

Es kann vorgesehen sein, dass der Preformkörper einen sich an den Boden des Preforms anschliessenden Abschnitt, einen sich an das Halsteil anschliessenden Abschnitt und dazwischen einen sich verjüngenden (vorzugsweise kegelförmigen) Abschnitt aufweist. Der sich verjüngende Abschnitt stellt mit Vorteil den Übergang zwischen dem sich an den Boden anschliessenden Abschnitt und dem sich an das Halsteil anschliessenden Abschnitt des Preformkörpers her und kann auch als "Preformanlauf" oder "Preformschulter" bezeichnet werden.

Nach einer bevorzugten Ausgestaltungsvariante ist die durchschnittliche Wandstärke des sich an den Boden des Preforms anschliessenden Abschnitts (vorzugsweise um mindestens 80 bis 120 Prozent) grösser als die durchschnittliche Wandstärke des sich an das Halsteil anschliessenden Abschnitts und/oder als die durchschnittliche Wandstärke des sich verjüngenden Abschnitts.

Eine bevorzugte durchschnittliche Wandstärke des sich an den Boden des Preforms anschliessenden Abschnitts des Preformkörpers beträgt 3 bis 5 Millimeter.

Die Wandstärke des sich verjüngenden Abschnitts kann sich in Richtung vom sich an das Halsteil anschliessenden Abschnitt zum sich an den Boden anschliessenden Abschnitt (insbesondere gleichmässig) vergrössern und zwar mit Vorteil von einer Wandstärke, die der Wandstärke des sich an das Halsteil anschliessenden Abschnitts entspricht zu einer Wandstärke, die der Wandstärke des sich an den Boden des Proforms anschliessenden Abschnitts entspricht. Die Wandstärke des sich verjüngenden Abschnitts kann jedoch auch im Wesentlichen konstant sein. In letzterem Fall kann vorgesehen sein, dass sich die Wandstärke des sich an den Boden des Preforms anschliessenden Abschnitts in Richtung vom sich verjüngenden Abschnitt zum Boden des Preforms hin vergrössert. Ein Beispiel sind gestufte Preformkörper.

Eine bevorzugte durchschnittliche Wandstärke des sich an das Halsteil anschliessenden Abschnitts beträgt zwischen 1 und 2,5 Millimeter.

Der sich an das Halsteil anschliessende Abschnitt kann eine Form aufweisen, wie sie weiter unten für das Halsteil beschrieben ist. Insbesondere kann der besagte Abschnitt kreiszylindrisch ausgebildet sein.

Gemessen parallel zur Mittelachse des Preforms beträgt eine bevorzugte Länge des sich an das Halsteil anschliessenden Abschnitts mindestens 1 und/oder höchstens 10 Millimeter und/oder des sich verjüngenden Abschnitts mindestens 1 und/oder höchstens 20 Millimeter und/oder des sich an den Boden des Preforms anschliessenden Abschnitts mindestens 5 und/oder höchstens 50 Millimeter.

Der Halsteil kann aussen und/oder innen ein Gewinde oder ein anderes Befestigungsmittel (z.B. in Form von Vorsprüngen und/oder Vertiefungen) für die Befestigung eines Behälterdeckels aufweisen.

Ist ein Supportring vorgesehen, so können sich die genannten Befestigungsmittel und der Preformkörper in Bezug auf den Supportring gegenüberliegen.

Weist das Halsteil eine im Wesentlichen kreiszylindrische Form auf, so beträgt sein innerer Durchmesser, d.h. der Durchmesser des Innenraums im Bereich des Halsteils, vorzugsweise mehr als 9 Millimeter und/oder weniger als 22 Millimeter.

Vorzugsweise ist der Preform gesamthaft mehr als 30 oder 40 Millimeter und/oder weniger als 150 oder 120 oder 90 Millimeter lang.

Der Preform ist für die Verwendung in einem Streckblasverfahren zur Herstellung eines Behälters, insbesondere einer Flasche, ausgebildet.

Es kann vorgesehen sein, dass der Stift entlang der Mittelachse des herzustellenden Preforms in die Polymermasse eingefahren wird, wobei durch das Einfahren des Stifts der Volumenschwund ganz oder teilweise kompensiert wird.

Nach einer bevorzugten Variante ist vorgesehen, dass der Preform durch Spritzguss ohne Nachdruck aus dem für den Spritzguss verwendeten Spritzaggregat gefertigt ist.

Alternativ kann der Preform durch Spritzguss mit Nachdruck aus dem für den Spritzguss verwendeten Spritzaggregat gefertigt sein.

Es ist vorteilhaft, wenn der Preform einen Acetaldehyd-Gehalt von weniger als 2,5 ppm aufweist, vorzugsweise gemessen nach der Fraunhofer Methode (IVV Freising 1.4001). Da der Acetaldehyd-Gehalt mit der Zeit sinkt, soll das Beschriebene für einen Preform gelten, dessen Herstellung weniger als 6 Monate zurückliegt.

Gemäss einer Variante enthält der Preform und/oder die Polymermasse keine Acetaldehyd-reduzierenden Additive.

Optional kann vorgesehen sein, dass der Preform und/oder die Polymermasse keine kettenverlängernden Additive enthält.

Der Preform weist einen Innenraum auf, der sich von der Ausgiessöffnung bis zum Boden des Preforms erstreckt. Bei der Herstellung des Preforms kann die Form des Innenraums im Bereich des Halsteils mit Vorteil durch den Kern definiert werden. Die Form des Hohlraums im Bereich des Preformkörpers wird vorzugsweise durch den Kern und/oder den Stift definiert.

Das Verhältnis (a)/(b) ist vorzugsweise grösser als: 60, 70 oder 80 und/oder kleiner als 150, 130 oder 110, wobei (a) der mittleren Wandstärke des Preforms im Bereich des Preformkörpers und (b) der Länge der Wand des Preforms von der Ausgiessöffnung bis zum Mittelpunkt des Bodens entspricht.

Die genannte Länge der Wand wird bevorzugt entlang einer Linie gemessen, die im Bereich des Preformkörpers in der Wandmitte (d.h. in der Mitte zwischen der äusseren und der inneren Oberfläche der Wand) verläuft. Im Bereich des Halsteils verläuft die Linie ebenfalls in der Wandmitte, wobei Strukturen auf der Aussenseite oder der Innenseite der Wand (z.B. Gewinde oder Supportring) nicht zu berücksichtigen sind. Nach einer Variante verläuft die Linie im Bereich des Halsteils in einem konstanten Abstand von der Innenwandung, wobei der konstante Abstand dem Abstand von der Innenwandung in der Wandmitte am Ort der geringsten Wandstärke entspricht, und zwar im Abstand vom Rand der Ausgiessöffnung. Denn mit dem Ort der geringsten Wandstärke ist sinnvollerweise nicht der Rand der Ausgiessöffnung gemeint, weil dort die Wandstärke auf Null zuläuft.

Ein vorteilhaftes Verhältnis der Länge (L) des Preforms zur mittleren Wandstärke (D) des Preforms im Bereich des Preformkörpers (also L/D) ist grösser als 15 oder 20 und/oder kleiner als 120 oder 150.

Wie beschrieben ist im Innenraum des Preforms, insbesondere im Bereich des Preformkörpers, auf einer Länge von mindestens 30 Millimetern der Abstand jedes Punktes der Innenwandung von der Mittelachse kleiner als 3,5 Millimeter. Vorteilhaft ist dabei das Verhältnis der Länge des Preforms (L) zum genannten Abstand (A) des Preforms (also L/ A) grösser als 10, 14 oder 18.

Es handelt sich beim Preform um einen solchen für die Verwendung in einem Streckblasverfahren zur Herstellung eines Kunststoffbehälters wobei der Behälter vorzugsweise streckverfestigt ist und/oder der Behälter eine Flasche ist und/oder der Behälter ein Fassungsvermögen von weniger als: 450, 350 oder 250 Millilitern und/oder mehr als 50 Millilitern aufweist.

Die Polymermasse und/oder der Preform können Polyethylenfuranoat (PEF) und/oder Polyethylenterephthalat (PET) und/oder Polypropylen (PP) und/oder Polyethylennaphthalat (PEN) und/oder Polymilchsäure (PLA) enthalten. Es ist von Vorteil, wenn die Polymermasse und/oder der Preform im Wesentlichen aus einem der genannten Polymere besteht oder wenn eines der genannten Polymere den überwiegenden Teil der Polymermasse und/oder des Preforms ausmacht, d.h. in einem Anteil (bezogen auf das Gesamtgewicht der Polymermasse oder des Preforms) vorhanden ist, der mindestens 80, 90 oder 95 Prozent beträgt. Besonders bevorzugt ist dabei, wenn der Preform im Wesentlichen aus PET oder PEF hergestellt ist.

Die Polymermasse und/oder der Preform können Copolymere, Additive, Farben, Gleitmittel, Füllstoffe, Coatings und/oder andere Zuschlagsstoffe enthalten, vorzugsweise in einem Anteil (bezogen auf das Gesamtgewicht der Polymermasse oder des Preforms) von weniger als 15, 10 oder 5 Prozent.

Das erwähnte PEF kann ganz oder teilweise aus Erdöl oder aus (weniger als 1000 Jahre alter) Biomasse hergestellt sein.

Die Kavität ist durch eine Matrize und einen Kern gebildet. Die Polymermasse wird durch den Kontakt mit der Kavität gekühlt, wodurch bei der Polymermasse ein Volumenschwund (Verringerung des Volumens) bewirkt wird. Der durch das Abkühlen der Polymermasse bewirkte Volumenschwund wird ganz oder teilweise durch das Einfahren des Stiftes kompensiert und/oder der einfahrende Stift nimmt den durch den Volumenschwund der Polymermasse in der Kavität frei werdenden Raum ganz oder teilweise ein.

Wird nur ein Teil des Volumenschwunds durch das Einfahren des Stifts kompensiert, so kann ein weiterer Teil des Volumenschwunds durch einen Nachdruck, d.h. durch eine weitere Zugabe von Polymermasse in die Kavität, kompensiert werden.

Wenn in diesem Dokument von der Zugabe der Polymermasse in die Kavität gesprochen wird, so sei vorzugsweise die Zugabe gemeint, bei der die Form vollständig mit der heissen fliessfähigen Polymermasse gefüllt wird. Mit Vorteil handelt es sich dabei im Verfahren um die erste Zugabe von Polymermasse in die Kavität.

Wird im Wesentlichen der gesamte Volumenschwund durch das Einfahren des Stifts kompensiert, so kann (nach der Zugabe der Polymermasse in die Kavität) auf eine weitere Zugabe von Polymermasse in die Kavität und/oder auf einen Nachdruck verzichtet werden.

Es besteht die Möglichkeit, dass vor der Zugabe der Polymermasse in die Kavität der Stift bereits teilweise eingefahren ist und/oder sich bereits teilweise in der Kavität befindet. Nach der Zugabe der Polymermasse in die Kavität kann der Stift dann weiter eingefahren werden, um den beschriebenen Volumenschwund ganz oder teilweise zu kompensieren.

Wenn in diesem Dokument davon die Rede ist, dass der Stift eingefahren wird, so sei vorzugsweise gemeint, dass der Stift in die Polymermasse und/oder in die Kavität eingefahren wird, wobei im Falle von Unklarheiten vorzugsweise das Einfahren nach der Zugabe der Polymermasse in die Kavität gemeint sei.

Den Stift bereits vor der Zugabe der Polymermasse in die Kavität teilweise in die Kavität einzufahren, ermöglicht es, das Volumen der Kavität anzupassen. Dies kann vorteilhaft sein im Zusammenhang mit der Verwendung unterschiedlicher Polymere, die bei ihrer Abkühlung einen unterschiedlich starken Volumenverlust erfahren.

Wird der durch das Abkühlen der Polymermasse bewirkte Volumenschwund ganz oder teilweise durch das Einfahren des Stiftes kompensiert, so kann auf einen Nachdruck ganz oder teilweise verzichtet werden, was schnellere Zyklen möglich macht. Je nach Art der verwendeten Vorrichtung können noch weitere Verbesserungen erzielt werden. Beispielsweise wäre eine Schnecke bei direkter Einspritzung in den Heisskanal (d.h. den Kanal der das Polymer zur Kavität führt) durch den Nachdruck gebunden. Bei Spritzaggregaten mit indirekter Einspritzung können teure Komponenten wie z.B. Nachdruckbaustein oder Shooting POT weggelassen werden, wenn kein Nachdruck notwendig ist. Auch komplexe teure Schneckenantriebe mit Intrusion wären nicht mehr nötig.

Besonders bevorzugt zeichnet sich das Verfahren dadurch aus, dass der Preform ohne Nachdruck gefertigt wird. Kann auf einen Nachdruck verzichtet werden, so ist der Einsatz viel kleinerer Spritzaggregate möglich, da die Schnecke ohne Nachdruckzeit viel mehr Zeit für die Plastifizierung hat. Durch die längere Zeit, die zum Plastifizieren zur Verfügung steht, können kleinere günstigere Spritzaggregate verwendet werden, mit geringeren Verweilzeiten der Schmelze unter hoher Temperatur. Generell sind eine Beschleunigung des Prozesses und geringe Verweilzeiten der Schmelze begrüssenswert, denn bei vielen Werkstoffen zählt wegen thermischen Abbaus jede Sekunde. Bei PET entsteht zum Beispiel ein Abbauprodukt das sich Acetaldehyd nennt, und das speziell bei kleinen Flaschen, z.B. kleinen Mineralwasserflaschen, durch das ungünstige Oberflächen-zu-Volumen-Verhältnis ein deutliches Problem darstellt.

Es kann vorgesehen sein, dass das Volumen der Polymermasse (in der Kavität) vor dem Einfahren des Stifts grösser ist, als das Volumen der Polymermasse in der Gestalt des Preforms nach der Entfernung des Preforms aus der Kavität.

Vorzugsweise unterscheiden sich die genannten Volumina im Wesentlichen um das Volumen, welches dem (nach der Zugabe des Polymers in die Kavität) eingefahrenen Stift oder Stiftteil entspricht.

Die Menge an Polymer in der Polymermasse in der Kavität (d.h. die Masse des Polymers) vor dem Einfahren des Stifts kann gleich gross sein, wie die Menge an Polymer in der Polymermasse in der Gestalt des Preforms nach der Entfernung des Preforms aus der Kavität.

Vorzugsweise wird die Form (insbesondere die Matrize und/oder der Kern) und/oder die Polymermasse während des Einfahrens des Stifts gekühlt, beispielsweise mittels eines Fluids wie Wasser. Dieses kann z.B. durch Kühlgänge in der Form (insbesondere in der Matrize und/oder im Kern) geleitet werden. Die Form und/oder die Polymermasse kann auch vor und/oder nach dem Einfahren des Stifts gekühlt werden.

Es ist bevorzugt, dass während des Einfahrens des Stifts der Stift (ausser allenfalls über das Polymer selbst) nicht gekühlt wird. In diesem Fall besteht die Möglichkeit, dass der Stift massiv ausgebildet ist und/oder keine Kühlgänge aufweist. Dadurch kann eine erhöhte Stabilität des Stifts erreicht werden. Bevorzugt ist der Stift aus Stahl gefertigt.

Nach einer Ausgestaltungsvariante wird der Stift vor dem Einfahren des Stifts und/oder nach der Entfernung des Stifts aus der Kavität gekühlt und zwar vorzugsweise von aussen und/oder nicht von innen.

Nach einer bevorzugten Variante ist der Stift aus dem Kern heraus bewegbar und in den Kern hinein bewegbar und/oder der Stift wird während des Einfahrens in die Polymermasse und/oder in die Kavität aus dem Kern heraus bewegt.

Der Stift kann mit Vorteil über den Kontakt mit dem Kern gekühlt werden. Zu diesem Zweck kann der Stift in den Kern hinein bewegt werden.

Es besteht auch die Möglichkeit, dass die Kühlung des Stifts durch direkten Kontakt des Stifts mit einem Kühlfluid wie Luft erfolgt. Nach einer Ausgestaltungsvariante wird der Stift zu diesem Zweck aus der Kavität entfernt und mit dem Fluid in Kontakt gebracht, beispielsweise indem er in einen gekühlten Schacht gefahren wird.

Da die Polymermasse vor dem Einfahren des Stifts vorzugsweise nur über die Matrize und den Kern gekühlt wird, bleibt sie dort, wo der Stift eintaucht, während des Einfahrens flüssig.

Durch eine Kühlung des Kerns und/oder des Stiftes kann verhindert werden, dass Polymer bei der Entformung des Preforms am Kern und/oder am Stift haften bleibt und Fäden zieht, oder es kann zumindest eine Verbesserung hinsichtlich dieser Problematik erreicht werden. Denn durch das Anhaften des Polymers kann es bei der Entformung des Preforms zu Deformationen kommen.

Alternativ oder zusätzlich kann die mit der Polymermasse in Kontakt tretende Aussenseite des Kerns und/oder des Stifts eine haftvermindernde Oberfläche oder Schicht aufweisen.

Die haftvermindernde Oberfläche oder Schicht weist zweckmässigerweise einen (beispielsweise um mindestens 10 oder 20 Prozent) geringeren Haftreibungskoeffizienten und/oder Gleitreibungskoeffizienten auf, als es die besagte Aussenseite ohne die besagte haftvermindernde Oberfläche oder Schicht tun würde, oder als es die mit der Polymermasse in Kontakt tretende Oberfläche der Matrize tut.

Gemäss einer Variante besitzt die haftvermindernde Oberfläche eine Struktur, die einen Lotuseffekt oder einen vergleichbaren Effekt erzeugt.

Die haftvermindernde Oberfläche kann auch einen Mittenrauwert (Arithmetisches Mittel der Abweichungen von der Mittellinie) von weniger als 1,5 Mikrometern aufweisen. Dies kann z.B. durch das Polieren der Oberfläche erreicht werden.

Die haftvermindernde Schicht kann in fester Form, vorzugsweise in der Form einer Teflon-Schicht, vorliegen. Eine haftvermindernde Schicht kann beispielsweise mittels Plasmabeschichtung auf die Oberfläche des Stifts aufgebracht werden.

Es besteht aber auch die Möglichkeit, dass die haftvermindernde Schicht in fliessfähiger, insbesondere flüssiger, Form vorliegt, vorzugsweise als Gleitmittel. Das Gleitmittel kann optional in regelmässigen zeitlichen Abständen oder nach jeder Entformung eines Preforms ersetzt werden. Beim Gleitmittel kann es sich beispielsweise um ein Öl oder um einen Puder handeln.

Beim vorgeschlagenen Verfahren ist vorgesehen, dass die Kavität der Form mit einer flüssigen Polymermasse gefüllt wird. Bei der Polymermasse handelt es sich um eine solche, die bei Raumtemperatur fest ist, wobei sie bei der Zugabe in die Kavität eine Temperatur aufweist, die über ihrem Schmelzpunkt liegt, wodurch sie flüssig vorliegt. Das Wort "heiss" bedeutet in diesem Zusammenhang, dass die Polymermasse eine Temperatur aufweist, die ausreichend hoch ist, damit die Polymermasse fliessfähig ist und/oder eine Temperatur, die über dem Schmelzpunkt der Polymermasse liegt. Eine bevorzugte Temperatur der Polymermasse bei der Zugabe in die Kavität beträgt 20 bis 40 Grad Celsius über dem Schmelzpunkt der Polymermasse. Bei Polyestern beträgt sie typischerweise etwa 30°C über dem Schmelzpunkt. Bei PET ist der Schmelzpunkt üblicherweise 245°C und die Verarbeitung erfolgt beispielsweise bei etwa 275°C bis 295°C. Bei PET beträgt die genannte Temperatur deshalb vorzugsweise zwischen 260 und 300 Grad Celsius.

Durch das Abkühlen der Polymermasse in der Kavität, insbesondere durch den Kontakt mit der vorzugsweise gekühlten Matrize, verringert sich das Volumen der Polymermasse (Volumenschwund). Die Polymermasse zieht sich zusammen und das dadurch freiwerdende Volumen in der Kavität wird nach der bevorzugten Variante durch Einfahren des Stiftes kompensiert und/oder durch den Stift gefüllt.

Es ist von Vorteil, wenn sich das Volumen der Polymermasse durch die Abkühlung in der Kavität um mindestens 1, 2, oder 3 Prozent und/oder höchstens 20,15 oder 11 Prozent verringert (im Vergleich zum Volumen der Polymermasse vor der Abkühlung). Handelt es sich bei der Polymermasse im Wesentlichen um Polyethylenterephthalat (PET), so kann vorgesehen sein, dass die Verringerung des Volumens mindestens 3 und/oder höchstens 11 Prozent beträgt.

Alternativ oder zusätzlich kann vorgesehen sein, dass sich die Dichte der Polymermasse durch die Abkühlung in der Kavität um mindestens 1, 2, oder 3 Prozent und/oder höchstens 25, 18 oder 12 Prozent vergrössert (im Vergleich zur Dichte der Polymermasse vor der Abkühlung). Handelt es sich bei der Polymermasse im Wesentlichen um Polyethylenterephthalat (PET), so kann z.B. vorgesehen sein, dass die Dichte der Polymermasse vor der Abkühlung ca. 1,2 g/cm³ beträgt und nach der Abkühlung ca. 1,3 g/cm³.

Das Volumen der Kavität wird durch das Einfahren des Stiftes verringert und/oder die Form der Kavität wird durch Einfahren des Stifts verändert. Nach einer Variante kann vorgesehen sein, dass das Volumen des Teils des Stifts, der in die Polymermasse einfährt, im Wesentlichen dem beschriebenen Volumenschwund der Polymermasse entspricht.

Das Volumen des beschriebenen Teils des Stifts kann aber auch kleiner als der beschriebene Volumenschwund sein, wobei die Differenz zwischen dem Volumen und dem Volumenschwund durch eine weitere Zugabe von Polymer in die Kavität kompensiert werden kann (Nachdruck).

Weil die Kavität mit der fliessfähigen Polymermasse gefüllt wird, bevor der Stift eingefahren wird, muss die Polymermasse bei der Zugabe in die Kavität nicht zwischen Stift und Matrize fliessen. Wenn der Stift in eine sich bereits in der Kavität befindende Polymermasse eingefahren wird, besteht ausserdem die weiter oben beschriebene Problematik, dass der Stift durch die Polymermasse zur Seite gedrückt wird, nicht. Deshalb kann der Stift einen geringeren Querschnitt aufweisen, als dies bei Verfahren üblich ist, bei denen die Polymermasse erst nach dem Einfahren eines Stifts oder Kerns in die Form erstmals in die endgültige Form gespritzt wird.

Beim Verfahren wird die Kavität einer Form, vorzugsweise in einem Spritzverfahren, mit einer flüssigen Polymermasse gefüllt. Die Zugabe von Polymermasse in die Kavität wird dann vorzugsweise gestoppt. Der Stift wird in die sich in der Kavität befindende Polymermasse eingefahren und taucht in diese ein. Beim vorgeschlagenen Verfahren wird die Kavität der Form im Wesentlichen zur Gänze mit der fliessfähigen Polymermasse gefüllt, bevor der Stift eingefahren wird.

Wenn, wie beim Fliesspressen, durch den einfahrenden Stift erst die Kavität aufgefüllt werden müsste, würden grössere Kräfte auf den einfahrenden Stift wirken. Auch hinsichtlich des Verhältnisses "Wandstärke zu Fliessweg" wird durch das Einfahren des Stifts eine erhöhte Flexibilität erreicht. Dieses muss nicht mehr unter 1 zu 56 liegen, da die Polymermasse beim Auffüllen der Kavität, nicht durch einen bereits eingefahrenen Kern behindert wird und sich zu früh verfestigen könnte. Es hat sich gezeigt, dass durch das Füllen der Kavität mit der fliessfähigen Polymermasse, bevor der Stift eingefahren wird, Verhältnisse von Wandstärken zu "Fliesswegen" von deutlich über 60 realisiert werden können. Da der Begriff "Fliessweg" wegen der veränderten Herstellung missverständlich sein könnte, ist weiter oben stattdessen von der Länge der Wand des Preforms von der Öffnung des Preforms bis zum Mittelpunkt des Bodens des Preforms die Rede. Dies entspricht der Strecke, die ein Polymer nach den bekannten Verfahren durchfliessen müsste.

Der Mittelpunkt des Bodens des Preforms ist vorzugsweise auch beim vorliegenden Verfahren der Punkt, an dem die Polymermasse in die Kavität tritt. Wird der Preform durch Spritzguss hergestellt, so kann der Anspritzpunkt an der beschriebenen Stelle lokalisiert sein.

Die Kavität definiert mit Vorteil eine Form des Preforms, für die das weiter oben beschriebene Verhältnis (a)/(b) und/oder das beschriebene Verhältnis L/D zutrifft.

Die reduzierte Länge und Wanddicke des Preforms erlauben bei gleichem Volumen des daraus herzustellenden Behälters eine grössere Verstreckung. Solche Behälter können durch die stärkere Verstreckung weniger anfällig für eine Spannungsrissbildung sein. Die erhöhte Festigkeit ermöglicht es zudem, leichtere Behälter herzustellen.

Die bei der Zugabe in die Kavität noch flüssige Polymermasse wird durch das Abkühlen in der Kavität verfestigt.

Der Stift wird vorteilhaft während der Abkühlung und/oder der Verfestigung der Polymermasse in der Kavität in die Polymermasse eingefahren.

Die Abkühlung der Polymermasse in der Kavität wird so lange fortgesetzt, bis die Temperatur der Polymermasse unter den Schmelzpunkt und/oder unter die Glasübergangstemperatur der Polymermasse gefallen ist. Die Polymermasse ist nach der Verfestigung ein Festkörper und/oder nicht mehr fliessfähig. Im verfestigten Zustand besitzt die Polymermasse die Gestalt des Preforms und kann als Preform aus der Kavität entfernt werden.

Es kann vorgesehen sein, dass durch das Einfahren des Stifts ein Teil der Polymermasse verdrängt, d.h. von einem Ort in der Kavität an einen anderen bewegt wird.

Es ist von Vorteil, wenn durch das Einfahren des Stiftes die Polymermasse an die Matrize gedrückt wird und/oder ein durch den Volumenschwund bedingtes Ablösen der Polymermasse von der Matrize verzögert oder verhindert wird. Dadurch kann erreicht werden, dass die Aussenseite des herzustellenden Preforms länger mit der Matrize in Kontakt bleibt und so wirksamer gekühlt werden kann.

Gemäss einer Variante kann durch das Einfahren des Stiftes die Polymermasse an die Matrize gedrückt werden, wobei auf die Polymermasse eine Zugspannung in Richtung des Umfangs des Preforms und/oder des Umfangs des Stifts ausgeübt wird. Diese Zugspannung kann zu einer Orientierung der Molekülketten im Polymer in besagte Richtung führen. Vorteilhaft kann eine solche Orientierung die mechanischen Eigenschaften des herzustellenden Preforms verbessern. Beispielsweise könnten so die durch das Kriechen des Materials bewirkte Volumenaufweitung und/oder der CO2-Verlust verringert werden, was speziell bei kleinen Flaschen ein Vorteil darstellt.

Die Mittelachse des Preforms ist vorzugsweise im Wesentlichen deckungsgleich mit der Mittelachse des Stifts und/oder des Kerns.

Die Richtung, in die der Stift sich beim Einfahren bewegt, ist zweckmässigerweise parallel zur Mittelachse des Preforms.

Die Matrize definiert die Aussenform des Preforms, vorzugsweise sowohl im Bereich des Halsteils als auch im Bereich des Preformkörpers.

Der Kern definiert den Innenraum des Preforms im Bereich des Halsteils.

Der Stift definiert (ganz oder teilweise) den Innenraum des Preforms im Bereich des Preformkörpers, insbesondere den sich an den Boden des Preforms anschliessenden Teil des Innenraums.

Der Stift ist vorzugsweise relativ zum Kern beweglich und/oder aus dem Kern heraus ausfahrbar.

Zusammen definieren die Matrize, der Kern und der bis in seine Endposition eingefahrene Stift die Gestalt des Preforms, einschliesslich eines optionalen Supportrings.

Vorzugsweise ist der Abstand jedes Punktes des Stifts von der Mittelachse des Stifts (und/ oder von der Mittelachse des herzustellenden Preforms) kleiner als: 3,5 oder 3 oder 2,5 Millimeter. Dies gilt vorzugsweise für den gesamten sich in der Endposition in der Kavität befindenden Stift oder zumindest für den vordersten Teil des Stifts (d.h. den sich an die Spitze des Stifts anschliessenden Teil) mit einer Länge von mindestens: 30, 40 oder 50 Millimetern.

Vorzugsweise ist auf einer Länge von mindestens: 30, 40 oder 50 Millimetern der Abstand jedes Punktes der Innenwandung des herzustellenden Preforms von der Mittelachse des Preforms kleiner als: 3,5 oder 3 oder 2,5 Millimeter. Bevorzugt gilt dies zumindest für den sich an den Preformboden anschliessenden Teil der Innenwandung mit einer Länge von mindestens: 30, 40 oder 50 Millimetern.

Der Kern ist nach dem Schliessen der Form und bis diese zur Entnahme des Preforms wieder geöffnet wird, vorzugsweise relativ zur Matrize unbewegt. Die Polymermasse kann dann in den Raum zwischen Kern und Matrize fliessen, so wie das z.B. bei klassischen Spritzgussprozeßen der Fall ist.

Die Polymermasse kann im Wesentlichen aus Polyester bestehen. Bevorzugte Zusammensetzungen der Polymermasse sind weiter oben beschrieben.

Der Polyester kann optional eines oder mehrere der folgenden Additive enthalten: Gleitmittel, Farben, sowie UV-, Infrarot-, Sauerstoff-, Acetaldehyd-, oder Wasser-Absorber.

Der Polyester kann jedoch auch frei von einem oder mehreren der genannten Additive sein.

Der Polymermasse werden vorzugsweise keine Acetaldehyd-reduzierenden Additive zugesetzt. Unabhängig davon kann auch vorgesehen sein, dass der Polymermasse keine kettenverlängernden Additive (chain extender) zugegeben werden.

Gemäss einer Variante wird der Preform durch Spritzguss hergestellt. In diesem Fall kann es von Vorteil sein, wenn die mittlere Verweilzeit der Polymermasse im für den Spritzguss verwendeten Spritzaggregat weniger als 50 Sekunden beträgt und/oder wenn die Temperatur im Spritzaggregat über 250 Grad Celsius liegt.

Der Acetaldehyd-Gehalt der Polymermasse beim Verlassen des Spritzaggregats kann unter 2,5 ppm liegen, vorzugsweise gemessen nach der Fraunhofer Methode (IVV Freising 1.4001).

Das Verfahren kann sich dadurch auszeichnen, dass der Viskositätsverlust der Polymermasse im Spritzaggregat unter 0,02 dl/g liegt. Wenn es sich beim Polymer um PET handelt, wird der Viskositätsverlust vorzugsweise nach ASTM D4603 gemessen. Für andere Polymere sind dem Fachmann vergleichbare Verfahren bekannt.

Beschriebene Vorrichtungsteile, insbesondere der beschriebene Kern und Stift und die beschriebene Form mit Kavität seien als Teile einer Vorrichtung zur Herstellung eines Preforms und optional zur Herstellung eines Kunststoffbehälters aus dem Preform offenbart, wobei es sich beim Preform vorzugsweise um einen Preform handelt wie er in diesem Dokument beschrieben ist.

Zweckmässigerweise ist der in diesem Dokument beschriebene Preform durch das in diesem Dokument beschriebene Verfahren hergestellt und/oder das genannte Verfahren ist zur Herstellung des genannten Preforms ausgebildet.

Es sei auch eine Vorrichtung zur Herstellung von Preforms für die Verwendung in einem Streckblasverfahren, insbesondere einem zweistufigen Streckblasverfahren, zur Herstellung eines Kunststoffbehälters offenbart.

Die Vorrichtung ist vorzugsweise zur Herstellung des in diesem Dokument offenbarten Preforms und/oder zur Durchführung des in diesem Dokument offenbarten Verfahrens ausgebildet.

Die Vorrichtung kann eine Form mit einer Kavität aufweisen, wobei
- die Kavität die Form des herzustellenden Preforms definiert, welcher einen sich entlang einer Mittelachse des Preforms erstreckenden Preformkörper mit einem ersten Ende und einem dem ersten Ende gegenüberliegenden zweiten Ende aufweist, wobei das erste Ende verschlossen ist und sich an das zweite Ende ein Halsteil mit einer Ausgießöffnung anschließt, und mit einer einen Innenraum des Preforms begrenzenden Innenwandung,
- die Kavität durch eine Matrize und einen Kern gebildet ist,
- die Matrize dazu ausgebildet ist, die Aussenform des Preforms zu definieren,
- der Kern dazu ausgebildet ist, die Form des Innenraums des Preforms im Bereich des Halsteils des Preforms zu definieren,
- die Vorrichtung einen Stift aufweist, welcher aus dem Kern entlang der Mittelachse des herzustellenden Preforms in die Kavität einfahrbar ist,
- der Stift dazu ausgebildet ist, zumindest einen Teilbereich der Form des Innenraums des Preforms im Bereich des Preformkörpers zu definieren, insbesondere einen sich an das verschlossene Ende des Preforms anschliessenden Teilbereich,
- auf einer Länge von mindestens 30 Millimetern jeder Punkt des Stifts von der Mittelachse des Stifts und/oder von der Mittelachse des herzustellenden Preforms weniger als 3,5 Millimeter beabstandet ist, wobei es sich vorzugsweise um die vordersten 30 Millimeter des Stifts handelt.

Weitere bevorzugte Merkmale der Vorrichtung werden im Zusammenhang mit dem Preform und dem Verfahren weiter oben beschrieben.

Weiterhin kann vorgesehen sein, dass die Vorrichtung keinen Nachdruckbaustein und/oder keinen Shooting Pot und/oder keine Schneckenintrusion aufweist.

Offenbart sei zudem ein Verfahren zur Herstellung eines Kunststoffbehälters, insbesondere einer Flasche, aus einem in diesem Dokument beschriebenen Preform. Beim Verfahren handelt es sich um ein Streckblasverfahren, bei dem der Preform in einer Blasform zum Kunststoffbehälter gestreckt und geblasen wird.

Der Preform wird, bevor er gestreckt wird, vorzugsweise in einem Ofen auf mindestens 90 Grad Celsius erhitzt. Bevor er erhitzt wird, kann der Preform eine Temperatur von weniger als 40 Grad Celsius (insbesondere Raumtemperatur) aufweisen.

Der aus dem Preform hergestellte Kunststoffbehälter weist mit Vorteil ein Fassungsvermögen von weniger als 400 oder 200 und/oder mehr als 50 oder 100 Millilitern auf.

Der Kunststoffbehälter ist vorzugsweise streckverfestigt.

Details eines bevorzugten Verfahrens zur Herstellung eines Kunststoffbehälters können auch der weiter oben erwähnten Anmeldung mit dem Titel "Kunststoffbehälter und Streckblasverfahren" entnommen werden.

Sollte eine Angabe zu einer Norm nicht eindeutig sein, so ist die zum Zeitpunkt der Anmeldung aktuellste Version der Norm mit der der angegebenen Bezeichnung ähnlichsten Bezeichnung gemeint.

Begriffe in diesem Dokument sollen bevorzugt so verstanden werden, wie sie ein Fachmann auf dem Gebiet verstehen würde. Sind im jeweiligen Kontext mehrere Interpretationen möglich, so sei vorzugsweise jede Interpretation individuell offenbart. Insbesondere für den Fall, dass Unklarheiten bestehen sollten, können alternativ oder ergänzend die in diesem Dokument aufgeführten bevorzugten Definitionen herangezogen werden.

Aktionen, die in der Form von Eignungen, Fähigkeiten, Eigenschaften oder Funktionen der in diesem Dokument beschriebenen Vorrichtung (oder deren Teile) offenbart sind, seien auch (unabhängig und in beliebiger Kombination) als Verfahrensschritte des Verfahrens offenbart und zwar abhängig und unabhängig von der entsprechenden Vorrichtung oder dem entsprechenden Vorrichtungsteil.

Es sei zudem die Verwendung von Merkmalen der beschriebenen Vorrichtungen oder Vorrichtungsteile (unabhängig und in beliebiger Kombination) als Verfahrensschritte des Verfahrens offenbart.

Umgekehrt können die offenbarte Vorrichtung oder Vorrichtungsteile Mittel aufweisen, die einen oder mehrere der im Zusammenhang mit dem offenbarten Verfahren genannten Verfahrensschritte durchführen können und/oder dazu ausgebildet sind.

### Kurze Beschreibung der Zeichnungen

Es zeigt in schematischer, nicht massstabsgetreuer Darstellung:
- Fig. 1a:: eine Schnittdarstellung von Teilen einer Maschine zur Herstellung eines Preforms mit noch nicht eingefahrenem Stift;
- Fig. 1b:: eine Darstellung analog zu Fig.1 mit eingefahrenem Stift; und
- Fig. 2:: eine Schnittdarstellung eines Preforms.

### Ausführung der Erfindung

Die Erfindung wird nachfolgend anhand der Zeichnungen beispielhaft erläutert.

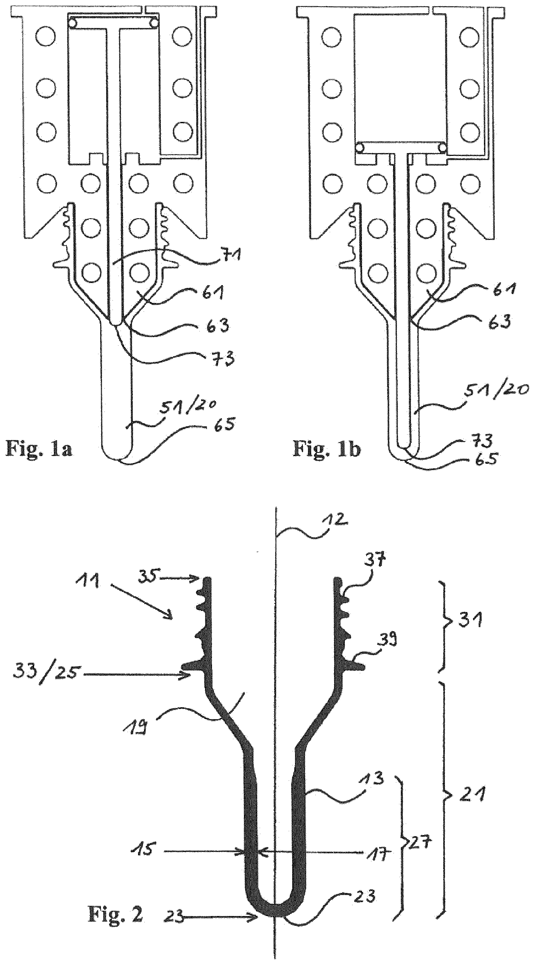

Die Fig. 1a und 1b zeigen Vorrichtungsteile einer Maschine zur Herstellung eines Preforms, während Fig.2 einen mit einer solchen Maschine herstellbaren Preform darstellt.

Bezug nehmend auf die Fig.2 weist der Preform 11 einen Preformkörper 21 und ein damit verbundenes Halsteil 31 auf. Die Mittelachse 12 des Preforms 11 verläuft durch ein erstes Ende 23 und ein zweites Ende 25 des Preformkörpers 21, wobei das erste Ende 23 des Preformkörpers 21 verschlossen ist und einen Boden des Preforms 11 bildet. Das Halsteil 31 weist eine Ausgiessöffnung 35 auf und schliesst sich an das zweite Ende 25 des Preformkörpers 21 an. Beim vorgeschlagenen Preform 11 beträgt auf einer Länge der Mittelachse 12 von mindestens 30, 40 oder 50 Millimetern der maximale Abstand der Innenseite 17 der Preformwand 13 von der Mittelachse 12 weniger als 3,5 oder 3 oder 2,5 Millimeter.

Weitere vorteilhafte Merkmale des Preforms 11 umfassen, wie in Fig.2 dargestellt, ein Gewinde 37 und einen Supportring 39 am Halsteil 31. Das Gewinde 37 erlaubt das spätere Anbringen eines (nicht dargestellten) Deckels an der Ausgiessöffnung des aus dem Preform 11 herzustellenden Kunststoffbehälters. Der Supportring 39 erleichtert die Handhabung des Preforms 11, was insbesondere bei einem zweistufigen Spritzstreckblasverfahren, wie es zur Herstellung des Preforms 11 und (daraus) des Kunststoffbehälters vorgesehen ist, Vorteile bringt. Bei einem solchen zweistufigen Verfahren wird der Preform 11 nach seiner Herstellung auf Raumtemperatur abgekühlt und erst später in einem Streckblasverfahren zu einem Kunststoffbehälter weiterverarbeitet. Der Preform 11 ist einstückig durch Spritzguss aus einem Polymer wie z.B. Polyester hergestellt, wobei dies vorzugsweise auch für Strukturen wie das Gewinde 37 und den Supportring 39 gilt, die auf der Aussenseite 15 der Wand 13 des Preforms 11 angeordnet sind. Wie der Preformkörper 21 weist auch das Halsteil 31 ein erstes Ende 33 und ein zweites Ende 35 auf, wobei das erste Ende 33 des Halsteils 31 mit dem zweiten Ende 25 des Preformkörpers 21 verbunden ist und das zweite Ende 35 des Halsteils 35 die Ausgiessöffnung aufweist. Letztere führt in den Innenraum 19 des hohlen Preforms 11, wobei sich der Innenraum 19 von der Ausgiessöffnung bis zum Boden des Preforms 11 erstreckt. Der Innenraum 19 wird von der Innenseite 17 (d.h. der inneren Oberfläche) der Wand 13 begrenzt, welche auch eine Aussenseite 15 (d.h. eine äussere Oberfläche) aufweist. Der Abstand zwischen der Innenseite 17 und der Aussenseite 15 ist die Wandstärke. Diese kann im Bereich des Preformkörpers 21 im Durchschnitt grösser sein als im Bereich des Halsteils 31, wobei Strukturen auf der Aussenseite 15 der Wand 13, wie das Gewinde 37 und der Supportring 39 bei der Beurteilung der Wandstärke vorzugsweise ausser Acht zu lassen sind. Die Wandstärke im Bereich des Halsteils kann mit Vorteil 0,5 bis 3 Millimeter betragen. Im Bereich des Preformkörpers kann die Wandstärke bevorzugt 2 bis 8 Millimeter betragen. Normalerweise wird bei der Herstellung des Kunststoffbehälters aus dem Preform 11 nämlich nur der Preformkörper 21 gestreckt und geblasen. Der Innenraum 19 weist im Bereich des Halsteils 31 einen grösseren Querschnitt auf, als im Bereich des Preformkörpers 21, wobei unter dem Querschnitt die Querschnittsfläche rechtwinklig zur Mittelachse 12 zu verstehen ist. Die Mittelachse 12 des Preforms 11 verläuft von der Ausgiessöffnung zum Boden, wobei sie im Wesentlichen gleichen Abstand von einander in Bezug auf die Mittelachse 12 gegenüberliegenden Punkten der Innenseite 17 hat, also in der Mitte des Innenraums 19 verläuft. Im sich an das Halsteil 31 anschliessenden Bereich des Preformkörpers 21 verjüngt sich der Innenraum 19, wobei er im Bereich 27 des ersten Endes 23 des Preformkörpers 21 seinen geringsten Querschnitt erreicht. Die Innenseite 17 der Wand 13 hat im beschriebenen Bereich 27 einen Abstand von höchstens 3,5 Millimetern von der Mittelachse 12, wobei der Bereich sich an den Boden des Preforms 11 anschliesst und mindestens 30 Millimeter lang ist.

Ein für ein 2-Stufen-Spritzstreckblasverfahren geeigneter Preform 11 kann, wie in Fig.2 gezeigt, angrenzend an eine der Ausgießöffnung 35 abgewandten Unterseite des Supportrings 39 einen sich in Richtung des Bodens 23 des Preforms erstreckenden kreiszylindrischen Abschnitt des Preformkörpers 21 aufweisen, dessen Wandstärke geringer ist als eine Wandstärke eines sich an den Boden 23 des Preforms anschliessenden Abschnitts des Preformkörpers 21. Typische Wanddstärken des kreiszylindrischen Abschnitts können zwischen 1mm und 2,5mm liegen. An den kreiszylindrischen Abschnitt schließt sich ein in der Regel kegelförmiger, sich in Richtung des Bodens 23 des Preforms verjüngender Abschnitt des Preformkörpers 21 an, der auch Preformanlauf oder Preformschulter genannt wird, und den kreiszylindrischen Abschnitt mit dem sich an den Boden 23 des Preforms anschliessenden Abschnitt des Preformkörpers 21 verbindet. In der Regel vergrößert sich die Wandstärke des kegelförmigen Abschnitts sukzessive von der Wandstärke des kreiszylindrischen Abschnitts auf die Wandstärke des sich an den Boden 23 des Preforms anschliessenden Abschnitts des Preformkörpers 21. Alternativ kann, wie in Fig.2 gezeigt, die Wandstärke des kegelförmigen Abschnitts etwa konstant bleiben, wobei sich die Wandstärke des Preformkörpers 21 dann erst im sich an den Boden 23 des Preforms anschliessenden Abschnitt des Preformkörpers 21 vergrößert, wie dies bei Preforms mit gestuften Preformkörpern der Fall sein kann. Typische Wanddicken des sich an den Boden 23 des Preforms anschliessenden Abschnitts des Preformkörpers 21 sind 3mm bis 5mm.

Hinsichtlich der Herstellung des vorbeschriebenen Preforms 11 wird auf die Fig.1a und 1b verwiesen. Dort sind Teile der dafür geeigneten Vorrichtung dargestellt. Der Preform 11 aus Fig.2 findet sich auch in Fig.1b (vgl. Bezugszeichen 20). Bei Erwähnung von Teilen des Preforms 11 sei jeweils ergänzend auf die Fig.2 verwiesen.

Der Preform 11 wird durch Spritzguss aus einer Polymermasse 20 hergestellt. Dazu wird eine Spritzform mit einer Kavität 51 benötigt, wobei die Form der Kavität 51 die Form des herzustellenden Preforms 11 definiert. Die Polymermasse 20 wird an einem Anspritzpunkt 65 in die Kavität 51 gespritzt, wobei die Kavität 51 vollständig mit Polymermasse 20 gefüllt wird. Während des Einspritzens wird die Kavität 51 durch eine (nicht dargestellte) Matrize und einen Kern 61 gebildet, wobei die Matrize die Form der gesamten Aussenseite 15 der Wand 13 des herzustellenden Preforms 11 definiert und wobei der Kern 61 die Form der Innenseite 17 der Wand 13 des herzustellenden Preforms 11 im Bereich des Halsteils 31 definiert. Durch den Kontakt mit der gekühlten Matrize und dem gekühlten Kern 61 sinkt die Temperatur der Polymermasse 20, welche beim Eintritt in die Kavität 51 noch über dem Schmelzpunkt der Polymermasse 20 liegt. Durch das Erkalten der Polymermasse 20 kommt es zu einem Volumenschwund, d.h. die Polymermasse 20 schrumpft. Das dadurch in der zuvor vollständig gefüllten Kavität 51 frei werdende Volumen wird durch einen Stift 71 gefüllt, der durch eine Öffnung 63 aus dem Kern 61 in die Kavität 51 eingefahren wird. Der Stift 71 wird, während er sich im Kern 61 befindet, durch den direkten Kontakt mit dem gekühlten Kern 61 von aussen gekühlt. Er weist selbst jedoch keine Kühlgänge auf. Da die Polymermasse 20 von aussen nach innen abkühlt, ist sie am Ort, an dem der Stift 71 in die Polymermasse 20 eintaucht noch flüssig. Der Stift 71 drückt während des Einfahrens die Polymermasse 20 gegen die Matrize und verhindert so ein Ablösen derselben von der Matrize. Der in die Kavität 51 eingefahrene Stift 71 verändert die Form der Kavität 51 und definiert die Form der Innenseite 17 der Wand 13 des Preforms 11 in einem Bereich 27 des Preformkörpers 21, wobei die Spitze 73 des Stifts 71 die Form der Innenseite 17 des Bodens des Preforms 11 definiert. Beim genannten Bereich 27, handelt es sich um einen mindestens 30 Millimeter langen Teilbereich, der sich an die Innenseite 17 des Bodens des Preforms 11 anschliesst. Da der Stift 71 erst eingefahren wird, wenn sich die Polymermasse 20 bereits in der Kavität 51 befindet, muss die Polymermasse 20 beim Einspritzen den Stift 71 nicht umfliessen. Statt eines schmalen ringförmigen Kanals zwischen Stift und Matrize steht der Polymermasse 20 vom Anspritzpunkt 64 bis zum Erreichen des Kerns 61 zur Verteilung in der Kavität 51 ein nur durch die Matrize begrenzter Kanal zur Verfügung. Dadurch wird eine zu schnelle Abkühlung der Polymermasse 20 verhindert. Dies erhöht die Flexibilität hinsichtlich der Dimensionierung des Preforms. Wenn der Stift 71 vollständig (d.h. bis zum Erreichen seiner vorgesehenen Endstellung) in die Kavität 51 eingefahren ist, entspricht die Form der Kavität 51 der Form des herzustellenden Prefoms 11. Die Polymermasse 20 kühlt in der Kavität 51 bis unter die Glasübergangstemperatur ab und wird fest. Der so entstandene Preform 11 kann anschliessend aus der Kavität 51 entfernt werden.

### Bezugszeichenliste:

- 11: Preform
- 12: Mittelachse
- 13: Wand
- 15: Aussenseite
- 17: Innenseite
- 19: Innenraum
- 20: Polymermasse
- 21: Preformkörper
- 23: erstes Ende / Boden
- 25: zweites Ende
- 27: Bereich mit geringem Durchmesser
- 31: Halsteil
- 33: erstes Ende
- 35: zweites Ende / Ausgiessöffnung
- 37: Gewinde
- 39: Supportring
- 51: Kavität
- 61: Kern
- 63: Öffnung
- 65: Anspritzpunkt
- 71: Stift
- 73: Spitze
- 75: Bereich mit geringem Durchmesser

## Patentansprüche

1. Preform (11) zur Herstellung eines Kunststoffbehälters in einem zweistufigen Spritzstreckblasverfahren aufweisend einen sich entlang einer Mittelachse erstreckenden Preformkörper (21) mit einem ersten Ende (23) und einem dem ersten Ende (23) gegenüberliegenden zweiten Ende(25), wobei das erste Ende durch einen Preformboden (23) verschlossen ist und sich an das zweite Ende (25) ein Halsteil (31) mit einer Ausgießöffnung (35) anschließt, und mit einer einen Innenraum (19) des Preforms (11) begrenzenden Innenwandung, **dadurch gekennzeichnet, dass** im Innenraum (19) auf einer an den Preformboden (23) anschliessenden Länge von mindestens 30mm jeder Punkt der Innenwandung von der Mittelachse weniger als 3,5mm beabstandet ist.

2. Preform nach Anspruch 1, **dadurch gekennzeichnet, dass** im Innenraum (19) auf einer Länge von mindestens 30 mm jeder Punkt der Innenwandung von der Mittelachse (12) weniger als 3 oder 2,5 mm beabstandet ist.

3. Preform nach einem der Ansprüche 1 bis 2, **dadurch gekennzeichnet, dass** er im Wesentlichen aus Polyester besteht, wobei es sich beim Polyester vorzugsweise um PEF oder PET handelt.

4. Preform nach einem der Ansprüche 1 bis 3, **dadurch gekennzeichnet, dass** das Verhältnis (a)/(b) grösser als 60 und kleiner als 110 ist, wobei (a) der mittleren Wandstärke des Preforms (11) im Bereich des Preformkörpers (21) und (b) der Länge der Wand (13) des Preforms (11) von der Ausgiessöffnung (35) bis zum Mittelpunkt des Preformbodens (23) entspricht, wobei die Länge der Wand (13) entlang einer Linie zu messen ist, die im Bereich des Preformkörpers (21) in der Wandmitte verläuft und im Bereich des Halsteils (31) in einem konstanten Abstand von der Innenwandung verläuft, wobei der konstante Abstand dem Abstand von der Innenwandung in der Wandmitte am Ort der geringsten Wandstärke entspricht.

5. Preform nach einem der Ansprüche 1 bis 4, **dadurch gekennzeichnet, dass** im Innenraum (19) im Bereich des Halsteils (31) die Innenwandung von der Mittelachse (12) zumindest in einem Teilbereich mehr als 4,5mm und vorzugsweise höchstens 11 mm beabstandet ist.

6. Preform nach einem der Ansprüche 1 bis 5, **dadurch gekennzeichnet, dass** es sich um einen Preform (11) für die Herstellung eines Kunststoffbehälters mit einem Fassungsvermögen von weniger als 400 Millilitern handelt.

7. Preform nach einem der Ansprüche 1 bis 6, **dadurch gekennzeichnet, dass** er bei einem Alter von weniger als 6 Monaten einen Acetaldehyd-Gehalt von weniger als 2,5 ppm aufweist.

8. Preform nach einem der Ansprüche 1 bis 7, **dadurch gekennzeichnet, dass** er keine Acetaldehyd-reduzierenden Additive und keine kettenverlängernden Additive enthält.

9. Verfahren zur Herstellung eines Preforms (11) nach einem der Ansprüche 1 bis 8, wobei
- eine Kavität (51) einer Form vollständig mit einer heissen fliessfähigen Polymermasse gefüllt wird, wobei die Kavität (51) durch eine Matrize und einen Kern (61) gebildet ist, wobei die Matrize die Aussenform des Preforms (11) definiert und wobei der Kern (61) die Form des Innenraums (19) des Preforms (11) im Bereich des Halsteils (31) definiert,
- die heisse Polymermasse durch Kontakt mit der Matrize und dem Kern (61) gekühlt wird, wobei durch das Erkalten der Polymermasse bei der Polymermasse ein Volumenschwund bewirkt wird, und
- ein Stift (71) entlang der Mittelachse (12) des herzustellenden Preforms (11) in die Polymermasse eingefahren wird, wobei durch das Einfahren des Stifts (71) der Volumenschwund kompensiert wird, wobei der Stift (71) zumindest einen Teilbereich der Form des Innenraums (19) des Preforms (11) im Bereich des Preformkörpers (21) definiert, welcher Preformkörper (21) einen Preformboden (23) aufweist,
**dadurch gekennzeichnet, dass**
- der Stift (71) relativ zum Kern (61) beweglich und/oder aus dem Kern (61) heraus ausfahrbar ist,
- im Innenraum (19) auf einer an den Preformboden (23) anschliessenden Länge von mindestens 30mm jeder Punkt der Innenwandung des herzustellenden Preforms (11) von der Mittelachse (12) weniger als 3,5mm beabstandet ist und
- der Preform (11) aus der Kavität entfernt wird.

10. Verfahren nach Anspruch 9, **dadurch gekennzeichnet, dass** auf einer Länge von mindestens 30mm jeder Punkt der Innenwandung des herzustellenden Preforms (11) von der Mittelachse (12) weniger als 3 oder 2,5 mm beabstandet ist.

11. Verfahren nach einem der Ansprüche 9 bis 10, **dadurch gekennzeichnet, dass** das Volumen der Polymermasse in der Kavität (51) vor dem Einfahren des Stifts (71) grösser ist als das Volumen der Polymermasse in der Gestalt des fertiggestellten Preforms (11) bei Entfernung des Preforms (11) aus der Kavität (51).

12. Verfahren nach einem der Ansprüche 9 bis 11, **dadurch gekennzeichnet, dass** die Menge an Polymer in der Polymermasse in der Kavität (51) vor dem Einfahren des Stifts (71) gleich gross ist, wie die Menge an Polymer in der Polymermasse in der Gestalt des fertiggestellten Preforms (11) bei Entfernung des Preforms (11) aus der Kavität.

13. Verfahren nach einem der Ansprüche 9 bis 12, **dadurch gekennzeichnet, dass** der Preform (11) durch Spritzguss ohne Nachdruck aus dem für den Spritzguss verwendeten Spritzaggregat gefertigt ist.

14. Verfahren nach einem der Ansprüche 9 bis 13, **dadurch gekennzeichnet, dass** während des Einfahrens des Stifts (71) in die Polymermasse der mit der Polymermasse in Kontakt tretende Teil des Stifts (71) nicht gekühlt wird.

15. Vorrichtung zur Herstellung eines Preforms (11) nach einem der Ansprüche 1 bis 8, welche eine Form mit einer Kavität (51) aufweist, wobei
- die Kavität (51) durch eine Matrize und einen Kern (61) gebildet ist,
- die Matrize dazu ausgebildet ist, die Aussenform des Preforms (11) zu definieren,
- der Kern (61) dazu ausgebildet ist, die Form des Innenraums (19) des Preforms (11) im Bereich des Halsteils (31) zu definieren,
- die Vorrichtung einen Stift (71) aufweist, welcher aus dem Kern (61) entlang der Mittelachse (12) des herzustellenden Preforms (11) in die Kavität (51) einfahrbar ist,
- der Stift (71) dazu ausgebildet ist, zumindest einen Teilbereich der Form des Innenraums (19) des Preforms (11) im Bereich des Preformkörpers (21) zu definieren,
**dadurch gekennzeichnet, dass** auf einer Länge von mindestens 30 Millimetern jeder Punkt des Stifts (71) von der Mittelachse (12) des herzustellenden Preforms (11) weniger als 3,5 Millimeter beabstandet ist.

## Claims

1. Preform (11) for manufacturing a plastic container in a two-stage injection stretch blow molding method that has a preform body (21) extending along a middle axis with a first end (23) and a second end (25) opposed to the first end (23), wherein the first end is sealed by a preform bottom (23) and a neck section (31) with a spout (35) joins the second end (25), and with a inner wall that limits an inner space (19) of the preform (11), **characterized in that** each point of the inner wall is spaced in the inner space (19) from the middle axis by less than 3,5 mm over a length of at least 30 mm joining the preform bottom (23).

2. Preform according to claim 1, **characterized in that** each point of the inner wall is spaced in the inner space (19) from the middle axis by less than 3 or 2,5 mm over a length of at least 30 mm.

3. Preform according to one of the claims 1 to 2, **characterized in that** it is essentially made of polyester, the polyester being preferably PEF or PET.

4. Preform according to one of the claims 1 to 3, **characterized in that** the ratio (a)/(b) is higher than 60 and lower than 110, wherein (a) corresponds to the mean wall thickness of the preform (11) in the region of the preform body (21) and (b) to the length of the wall (13) of the preform (11) from the spout (35) to the central point of the preform bottom (23), wherein the length of the wall (13) has to be measured along a line that runs in the region of the preform body (21) in the wall middle and that runs in the region of the neck section (31) at a constant distance from the inner wall, wherein the constant distance corresponds to the distance from the inner wall in the wall middle at the place where the wall thickness is the lowest.

5. Preform according to one of the claims 1 to 4, **characterized in that** the inner wall is spaced from the middle axis (12) in the inner space (19) in the region of the neck section (31) at least in a partial area by less than 4,5 mm and preferably by maximally 11 mm.

6. Preform according to one of the claims 1 to 5, **characterized in that** the matter is for a preform (11) for manufacturing a plastic container with a capacity of less than 400 milliliters.

7. Preform according to one of the claims 1 to 6, **characterized in that** it has at the age of less than 6 months an acetaldehyde content of less than 2,5 ppm.

8. Preform according to one of the claims 1 to 7, **characterized in that** it does not contain any acetaldehyde reducing additives and any chain elongation additives.

9. Method for manufacturing a preform (11) according to one of the claims 1 to 8,
wherein
- a cavity (51) of a mold is completely filled with a hot flowable polymer mass, wherein the cavity (51) is formed by a matrix and a core (61), wherein the matrix defines the outer shape of the preform (11) and wherein the core (61) defines the shape of the inner space (19) of the preform (11) in the region of the neck section (31),
- the hot polymer mass is cooled by contact with the matrix and the core (61), wherein a volume shrinkage of the polyester mass is caused by the cooling of the polyester mass and
- a pin (71) is introduced into the polymer mass along the middle axis (12) of the preform to be manufactured (11), wherein the volume shrinkage is compensated by the introduction of the pin (71), wherein the pin (71) defines at least a partial area of the shape of the inner space (19) of the preform (11) in the region of the preform body (21), which preform body (21) has a preform bottom (23), **characterized in that**
- the pin (71) is movable with respect to the core (61) and/or can be driven out of the core (61),
- each point of the inner wall of the preform to be manufactured (11) is spaced in the inner space (19) from the middle axis (12) by less than 3,5 mm over a length of at least 30 mm joining the preform bottom (23) and
- the preform (11) is removed from the cavity.

10. Method according to claim 9, **characterized in that** each point of the inner wall of the preform to be manufactured (11) is spaced from the middle axis (12) by less than 3 or 2,5 mm over a length of at least 30 mm.

11. Method according to one of the claims 9 to 10, **characterized in that** the volume of the polymer mass in the cavity (51) before introducing the pin (71) is higher than the volume of the polymer mass in the shape of the preform to be manufactured (11) when removing the preform (11) out of the cavity (51).

12. Method according to one of the claims 9 to 11, **characterized in that** the polymer quantity in the polymer mass in the cavity (51) before introducing the pin (71) is as high as the polymer quantity in the polymer mass in the shape of the preform to be manufactured (11) when removing the preform (11) out of the cavity (51).

13. Method according to one of the claims 9 to 12, **characterized in that** the preform (11) is manufactured by injection molding without holding the pressure from the injection unit used for the injection molding.

14. Method according to one of the claims 9 to 13, **characterized in that** the part of the pin (71) contacting the polymer mass is not cooled before introducing the pin (71).

15. Device for manufacturing a preform (11) according to one of the claims 1 to 8 that has a form with a cavity (51), wherein
- the cavity (51) is formed by a matrix and a core (61),
- the matrix is designed so as to define the outer shape of the preform (11),
- the core (61) is designed so as to define the shape of the inner space (19) of the preform (11) in the region of the neck section (31),
- the device has a pin (71) that can be introduced into the cavity (51) out of the core (61) along the middle axis (12) of the preform to be manufactured (11),
- the pin (71) is designed so as to define at least a partial area of the shape of the inner space (19) of the preform (11) in the region of the preform body (21), **characterized in that** each point of the pin (71) is spaced from the middle axis (12) of the preform to be manufactured by less than 3,5 millimeter over a length of at least 30 millimeters.

## Revendications

1. Préforme (11) pour la fabrication d'un récipient en matière plastique dans un procédé par injection étirage soufflage en deux étapes, préforme qui présente un corps de préforme (21) qui s'étend le long d'un axe médian avec une première extrémité (23) et une seconde extrémité (25) opposée à la première extrémité (23), cependant que la première extrémité (25) est fermée par un fond de préforme (23) et qu'une partie col (31) avec une ouverture verseuse (35) se rattache à la seconde extrémité (25) et avec une paroi intérieure qui délimite un espace intérieur (19) de la préforme (11), **caractérisée en ce que** chaque point de la paroi intérieure est espacé de l'axe médian de moins de 3,5 mm dans l'espace intérieur (19) sur une longueur d'au moins 30 mm qui se rattache au fond de la préforme (23).

2. Préforme selon la revendication 1, **caractérisée en ce que** chaque point de la paroi intérieure est espacé de l'axe médian (12) de moins de 3 ou de 2,5 mm dans l'espace intérieur (19) sur une longueur d'au moins 30 mm.

3. Préforme selon l'une des revendications 1 à 2, **caractérisée en ce qu'**elle est essentiellement en polyester, s'agissant pour le polyester de préférence de PEF ou de PET.

4. Préforme selon l'une des revendications 1 à 3, **caractérisée en ce que** le rapport (a)/(b) est supérieur à 60 et inférieur à 110, cependant que (a) correspond à l'épaisseur de paroi moyenne de la préforme (11) dans la zone du corps de préforme (21) et (b) à la longueur de la paroi (13) de la préforme (11) de l'ouverture verseuse (35) au milieu du fond de la préforme (23), cependant que la longueur de la paroi (13) doit être mesurée le long d'une ligne qui passe dans la zone du corps de préforme (21) au milieu de la paroi et dans la zone de la partie col (31) à un écart constant de la paroi intérieure, l'écart constant correspondant à l'écart de la paroi intérieure au milieu de la paroi à l'endroit de l'épaisseur la plus faible de la paroi.

5. Préforme selon l'une des revendications 1 à 4, **caractérisée en ce que** la paroi intérieure est espacée de l'axe médian (12) dans l'espace intérieur (19) dans la zone de la partie col (31) de plus de 4,5 mm et de préférence d'au plus 11 mm au moins dans une zone partielle.

6. Préforme selon l'une des revendications 1 à 5, **caractérisée en ce qu'**il s'agit d'une préforme (11) pour la fabrication d'un récipient en matière plastique d'une contenance inférieure à 400 millilitres.

7. Préforme selon l'une des revendications 1 à 6, **caractérisée en ce qu'**elle présente, à un âge de moins de 6 mois, une teneur en éthanal inférieure à 2,5 ppm.

8. Préforme selon l'une des revendications 1 à 7, **caractérisée en ce qu'**elle ne contient pas d'additifs qui réduisent l'éthanal et pas d'additifs d'allongement de chaîne.

9. Procédé pour la fabrication d'une préforme (11) selon l'une des revendications 1 à 8, cependant
- qu'une cavité (51) d'un moule est entièrement remplie avec une masse polymère fluide chaude, la cavité (51) étant formée par une matrice et un noyau (61), la matrice définissant la forme extérieure de la préforme (11) et le noyau (61) définissant la forme de l'espace intérieur (19) de la préforme (11) dans la zone de la partie col (31),
- que la masse polymère chaude est refroidie par le contact avec la matrice et le noyau (61), un retrait volumique de la masse polymère étant provoqué par le refroidissement de la masse polymère et
- qu'une tige (71) est introduite dans la masse polymère le long de l'axe médian (12) de la préforme à fabriquer (11), le retrait volumique étant compensé par l'introduction de la tige (71), la tige (71) définissant au moins une zone partielle de la forme de l'espace intérieur (19) de la préforme (11) dans la zone du corps de préforme (21), lequel corps de préforme (21) présente un fond de préforme, **caractérisé en ce que**
- la tige (71) est mobile par rapport au noyau (61) et/ou peut être sortie du noyau (61),
- chaque point de la paroi intérieure de la préforme à fabriquer (11) est espacé de l'axe médian (12) de moins de 3,5 mm dans l'espace intérieur (19) sur une longueur d'au moins 30 mm qui se rattache au fond de la préforme (23) et
- que la préforme (11) est enlevée de la cavité.

10. Procédé selon la revendication 9, **caractérisé en ce que** chaque point de la paroi intérieure de la préforme à fabriquer (11) est espacé de l'axe médian (12) de moins de 3 ou de 2,5 mm sur une longueur d'au moins 30 mm.

11. Procédé selon l'une des revendications 9 à 10, **caractérisé en ce que** le volume de la masse polymère dans la cavité (51) est plus grande avant l'introduction de la tige (71) que le volume de la masse polymère sous forme de préforme fabriquée (11) lors de l'enlèvement de la préforme (11) de la cavité (51).

12. Procédé selon l'une des revendications 9 à 11, **caractérisé en ce que** la quantité de polymère dans la masse polymère dans la cavité (51) est aussi grande avant l'introduction de la tige (71) que la quantité de polymère dans la masse polymère sous forme de préforme fabriquée (11) lors de l'enlèvement de la préforme (11) de la cavité (51).

13. Procédé selon l'une des revendications 9 à 12, **caractérisé en ce que** la préforme (11) est fabriquée par moulage par injection sans pression de maintien à partir de l'unité d'injection utilisée pour le moulage par injection.

14. Procédé selon l'une des revendications 9 à 12, **caractérisé en ce que** la partie de la tige (71) qui est en contact avec la masse polymère n'est pas refroidie pendant l'introduction de la tige (71) dans la masse polymère.

15. Dispositif pour la fabrication d'une préforme (11) selon l'une des revendications 1 à 8 qui présente une forme avec une cavité (51), cependant que
- la cavité (51) est formée par une matrice et un noyau (61),
- la matrice est conçue pour définir la forme extérieure de la préforme (11),
- le noyau (61) est conçu pour définir la forme de l'espace intérieur (19) de la préforme (11) dans la zone de la partie col (31),
- le dispositif présente une tige (71) qui peut être introduite dans la cavité (51) en sortant du noyau (61) le long de l'axe médian (12) de la préforme à fabriquer (11),
- la tige (71) est conçue pour définir au moins une zone partielle de la forme de l'espace intérieur (19) de la préforme (11) dans la zone du corps de préforme (21),
**caractérisé en ce que** chaque point de la tige (71) est espacé de l'axe médian (71) de la préforme à fabriquer (11) de moins de 3,5 mm sur une longueur d'au moins 30 mm.
